# EUROPEAN PATENT APPLICATION

(11) **EP 4 105 862 A2**
(43) Date of publication of application: **21.12.2022**
(21) Application number: 22190493.1
(22) Date of filing: 16.08.2022
(51) Int. Cl.: G06Q 10/06

(54) **DATA PROCESSING METHOD AND APPARATUS, ELECTRONIC DEVICE AND STORAGE MEDIUM**

(30) Priority: 17.08.2021 CN 202110944983
(71) Applicant: Beijing Baidu Netcom Science Technology Co., Ltd., Beijing 100085 (CN)
(72) Inventor: WANG, Zeyu, Beijing, 100085 (CN)
(74) Representative: Maiwald GmbH

(57) **Abstract**

The disclosure provides a data processing method, a data processing apparatus, an electronic device and a storage medium, and relates to the technical field of artificial intelligence, in particular to the technical fields of natural language processing and cloud computing. The method includes: obtaining(S101; S201) resource data of a resource to be processed of each cloud service on a cloud platform, the resource to be processed being a resource related to an object to be processed on the cloud platform; determining (S102; S202) a processing requirement of the object to be processed; obtaining (S103) a data processing result corresponding to the processing requirement by analyzing the resource data according to a data processing strategy corresponding to the processing requirement; and pushing (S104; S205) the data processing result to the object to be processed.

## Description

### TECHNICAL FIELD

The disclosure relates to the technical field of artificial intelligence, especially to the technical fields of natural language processing and cloud computing, and in particular to a data processing method, a data processing apparatus, an electronic device and a storage medium.

### BACKGROUND

Currently, more and more enterprises choose to deploy their business services on cloud services to build their business system. The use of the business system involves a work order system service, a message center service, a homepage service of each product, and a financial center service in the cloud services. In the related art, the enterprise needs to manually obtain various required information from a work order system, a message center, a homepage of each product, and a financial center, and analyze the information manually.

### SUMMARY

The embodiments of the disclosure provide a data processing method, a data processing apparatus, an electronic device and a storage media.

According to an aspect of the disclosure, a data processing method is provided. The method includes: obtaining resource data of a resource to be processed of each cloud service on a cloud platform, in which the resource to be processed is a resource related to an object to be processed on the cloud platform; determining a processing requirement of the object to be processed; obtaining a data processing result corresponding to the processing requirement by analyzing the resource data according to a data processing strategy corresponding to the processing requirement; and pushing the data processing result to the object to be processed.

According to another aspect of the disclosure, a data processing apparatus is provided. The apparatus includes: an obtaining module, a determining module, a processing module and a pushing module. The obtaining module is configured to obtain resource data of a resource to be processed of each cloud service on a cloud platform, in which the resource to be processed is a resource related to an object to be processed on the cloud platform. The determining module, configured to determine a processing requirement of the object to be processed. The processing module is configured to obtain a data processing result corresponding to the processing requirement by analyzing the resource data according to a data processing strategy corresponding to the processing requirement. The pushing module is configured to push the data processing result to the object to be processed.

According to another aspect of the disclosure, an electronic device is provided. The electronic device includes: at least one processor and a memory communicatively coupled to the at least one processor. The memory stores instructions executable by the at least one processor, and when the instructions are executed by the at least one processor, the data processing method according to the above aspect of the disclosure is implemented.

According to another aspect of the disclosure, a non-transitory computer-readable storage medium having computer instructions stored thereon is provided. The computer instructions are configured to cause a computer to implement the data processing method according to the above aspect of the disclosure.

According to another aspect of the disclosure, a computer program product including computer programs is provided. When the computer programs are executed by a processor, the data processing method according to the above aspect of the disclosure is implemented.

It should be understood that the content described in this section is not intended to identify key or important features of the embodiments of the disclosure, nor is it intended to limit the scope of the disclosure. Additional features of the disclosure will be easily understood based on the following description.

### BRIEF DESCRIPTION OF THE DRAWINGS

The drawings are used to better understand the solution and do not constitute a limitation to the disclosure, in which:
FIG. 1 is a flow chart of a data processing method according to an embodiment of the disclosure.
FIG. 2 is a flow chart of a data processing method according to an embodiment of the disclosure.
FIG. 3 is a schematic diagram of a cloud resource cost management system according to an embodiment of the disclosure.
FIG. 4 is a flow chart of a data processing method executed by a cloud resource cost management system according to an embodiment of the disclosure.
FIG. 5 is a block diagram of a data processing apparatus according to an embodiment of the disclosure.
FIG. 6 is a schematic diagram of an electronic device used to implement a data processing method according to an embodiment of the disclosure.

### DETAILED DESCRIPTION

The following describes the exemplary embodiments of the disclosure with reference to the accompanying drawings, which includes various details of the embodiments of the disclosure to facilitate understanding, which shall be considered merely exemplary. Therefore, those of ordinary skill in the art should recognize that various changes and modifications can be made to the embodiments described herein without departing from the disclosure. For clarity and conciseness, descriptions of well-known functions and structures are omitted in the following description.

Currently, more and more enterprises choose to deploy their business services on cloud services to build their business system. The use of the business system involves a work order system service, a message center service, a homepage service of each product, and a financial center service in the cloud services. In the related art, the enterprise needs to manually obtain various required information from a work order system, a message center, a homepage of each product, and a financial center, and analyze the information manually. In this way, the acquisition cost is high, the acquisition efficiency is poor, and the analysis efficiency is poor.

In view of the above problems, the disclosure provides a data processing method, a data processing apparatus, an electronic device and a storage medium.

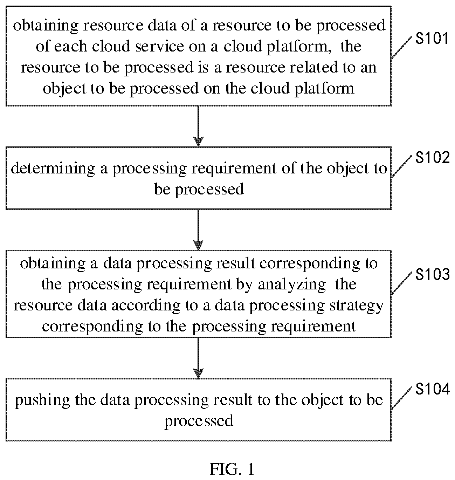

FIG. 1 is a flow chart of a data processing method according to an embodiment of the disclosure. It should be noted that the data processing method according to an embodiment of the disclosure can be performed by a data processing apparatus, and the apparatus can be configured in an electronic device, so that the electronic device can implement a data processing function.

The electronic device can be any device with a computing capability. The device can communicate with a cloud platform, and obtain resource data of a resource of an object to be processed from the cloud platform for analysis and processing under the authorization of the object to be processed. The device with the computing capability may be, for example, a personal computer (PC), a mobile terminal and a server. The mobile terminal may be, for example, a vehicle-mounted device, a mobile phone, a tablet computer, a personal digital assistant, a wearable device, and other hardware devices with various operating systems, touch screens and/or display screens.

The electronic device may also be a cluster composed of multiple devices, for example, a cloud platform. The cloud platform or a specific cloud service on the cloud platform can obtain the resource data of the resource of the object to be processed for analysis and processing under the authorization of the object to be processed.

As illustrated in FIG. 1, the data processing method includes the following steps.

In step 101, resource data of a resource to be processed of each cloud service on a cloud platform is obtained, the resource to be processed is a resource related to an object to be processed on the cloud platform.

In some embodiments of the disclosure, in order to improve accuracy and completeness of the acquired resource data, the mentioned cloud service can be a cloud service that can provide usage-related data on the cloud platform. For example, the cloud service can include at least one of a work order system service, a message center service, a resource homepage service and a financial center service.

In some embodiments of the disclosure, resource data of the work order system service includes work order information corresponding to the resource to be processed. The work order information may be a work order submitted by the object to be processed for a problem that occurs in the resource usage process, so that the cloud platform can solve the problem according to the work order. The work order information may include a processing status of the work order, a processing duration of the work order, a processed result of the work order, a resource targeted by the work order, a satisfaction degree of the work order and the number of work orders.

In some embodiments of the disclosure, resource data of the message center service includes malfunction push information and update push information corresponding to the resource to be processed. The malfunction push information includes at least one of the number of malfunctions, a malfunction frequency, a malfunction range, and a malfunction duration.

In some embodiments of the disclosure, resource data of the resource homepage service includes resource parameter information corresponding to the resource to be processed. The resource to be processed is a resource related to the object to be processed on the cloud platform, i.e., the resource purchased by the object to be processed on the cloud platform, such as a virtual machine, a storage resource, and a content distribution network. For example, the resource parameter information may be a resource list, a resource distribution situation, and a resource usage situation.

In some embodiments of the disclosure, resource data of the financial center service includes financial related information corresponding to the resource to be processed. For example, the financial related information may be consumption bill information of the resource to be processed.

In some embodiments of the disclosure, the object to be processed is an enterprise that deploys its business services on the cloud platform to build a business system.

In some embodiments of the disclosure, it should be noted that a way that the data processing apparatus obtains the resource data of the resource to be processed of each cloud service on the cloud platform may include capturing the resource data of the resource to be processed from pages of each cloud service, or sending a resource data acquisition request to each cloud service to obtain the resource data of the resource to be processed. Structural processing is performed on the resource data of the resource to be processed on each cloud service, that is, format unification processing is performed according to a preset format. The processed resource data is stored according to the object to be processed, or, according to the object to be processed and the resource related to the object to be processed, for subsequent use.

In step 102, a processing requirement of the object to be processed is determined.

In some embodiments of the disclosure, the processing requirement includes at least one of a risk reporting requirement, a service reporting requirement, a cost reporting requirement and an information screening requirement. Therefore, various processing requirements of the object to be processed can be satisfied, and individual needs of the objects to be processed can be satisfied. The processing requirement of the object to be processed can be set in advance, or can be provided by the object to be processed when the data processing result is to be obtained.

In step 103, a data processing result corresponding to the processing requirement is obtained by analyzing the resource data according to a data processing strategy corresponding to the processing requirement.

In some embodiments of the disclosure, in response to the processing requirement being the risk reporting requirement, the corresponding data processing result may include, for example, at least one of possible risk types, levels of the risk types, and the number of the risk types of each level. In response to the processing requirement being the service reporting requirement, the corresponding data processing result may include, for example, at least one of an average malfunction frequency, an average malfunction duration, an average processing duration of work orders, and an average satisfaction degree of work orders.

In some embodiments of the disclosure, in response to the processing requirement being the cost reporting requirement, the corresponding data processing result may include, for example, at least one of a sorted cost result of various resources, and a sorted cost result of various resource instances on each resource. In response to the processing requirement being the information screening requirement, the corresponding data processing result may include, for example, at least one of update push information related to a resource subscribed by the object to be processed, and update push information related to resource to be processed.

In step 104, the data processing result is pushed to the object to be processed.

In some embodiments of the disclosure, in order to improve the push efficiency of the data processing result, and to facilitate the optimization of the resources of the object to be processed based on the data processing result, in an example, the process of performing step 104 by the data processing apparatus can include: for example, determining a first display format corresponding to the data processing result; and displaying the data processing result on a display interface of the object to be processed according to the display format.

For another example, the process of performing step 104 by the data processing apparatus can include: determining a second display format corresponding to the data processing result and a third display format corresponding to the resource data; and displaying the data processing result according to the second display format and displaying the resource data according to the third display format on the display interface of the object to be processed.

For example, the display format may be a diagram, a pie chart, and a line chart. In addition, the data processing apparatus may determine at least one time period. Taking one time period as an example, the data processing apparatus may acquire resource data within the time period, and then determine a data processing result to display in a certain display format. Taking multiple time periods as an example, the data processing apparatus can obtain resource data in each time period respectively, and then determine a data processing result of each time period, and display the data processing results according to a determined display format simultaneously for comparison.

In some embodiments of the disclosure, the display interface of the object to be processed can partition blocks for displaying the data processing results and the resource data simultaneously. Alternatively, download links for various data processing results can be provided to the object to be processed for downloading.

With the data processing method according to the embodiments of the disclosure, the resource data of the resource to be processed of each cloud service on the cloud platform is obtained. The resource to be processed is the resource related to the object to be processed on the cloud platform. The processing requirement of the object to be processed is determined. The data processing result corresponding to the processing requirement is obtained by analyzing the resource data according to the data processing strategy corresponding to the processing requirement. The data processing result is pushed to the object to be processed. Therefore, the data processing result obtained by the analysis and processing can be directly displayed for the object to be processed, manual acquisition of the resource data of the object to be processed and manual analysis can be avoided, thereby improving the data acquisition efficiency, reducing the acquisition cost, and improving the analysis efficiency.

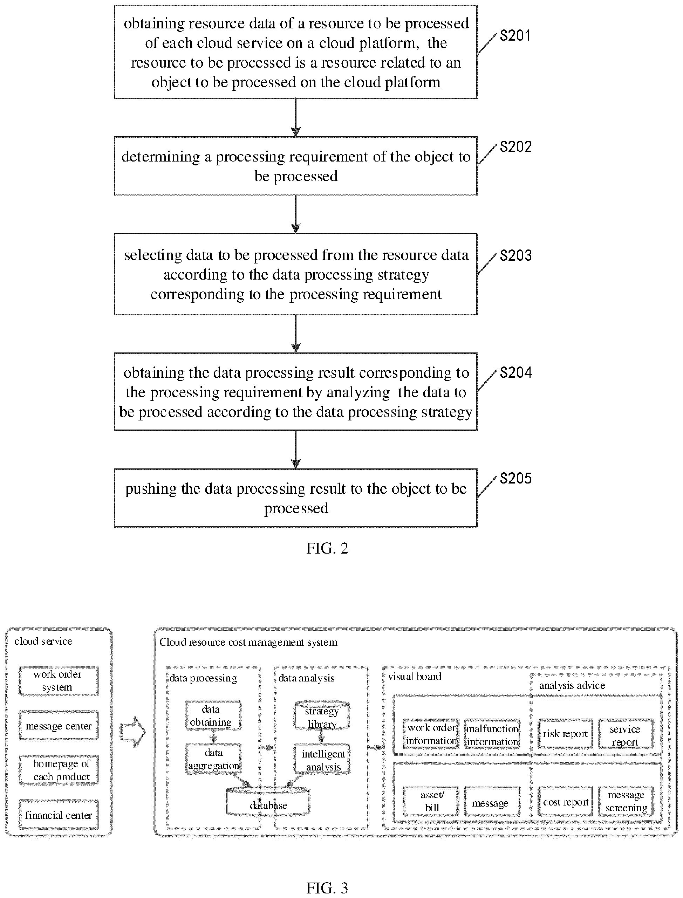

In order to further improve the data processing efficiency, different resource data can be obtained for processing according to different processing requirements, to reduce the quantity of resource data that is to be processed. As illustrated in FIG. 2, FIG. 2 is a flow chart of a data processing method according to an embodiment of the disclosure. In some embodiments of the disclosure, the data to be processed in the resource data can be determined according to the processing requirements, and then the data to be processed can be analyzed and processed according to the data processing strategy corresponding to each processing requirement. The embodiment shown in FIG. 2 may include the following steps.

In step 201, resource data of a resource to be processed of each cloud service on a cloud platform is obtained, the resource to be processed is a resource related to an object to be processed on the cloud platform.

In step 202, a processing requirement of the object to be processed is determined.

In step 203, data to be processed is selected from the resource data according to the data processing strategy corresponding to the processing requirement.

In some embodiments of the disclosure, in response to the processing requirement being a risk reporting requirement, the data to be processed is resource parameter information of the resource data. In response to the processing requirement being a service reporting requirement, the data to be processed is work order information and malfunction push information in the resource data. In response to the processing requirement being a cost reporting requirement, the data to be processed is resource parameter information and financial related information in the resource data. In response to the processing requirement being an information screening requirement, the data to be processed is update push information in the resource data.

In step 204, a data processing result corresponding to the processing requirement is obtained by analyzing the data to be processed according to the data processing strategy.

In some embodiments of the disclosure, in response to the processing requirement being a risk reporting requirement, the data to be processed is the resource parameter information of the resource data. Correspondingly, the process of performing the step 204 by the data processing apparatus may include, for example, determining whether the resource parameter information satisfies a risk condition corresponding to each risk type according to the resource parameter information; and generating the data processing result according to a risk type corresponding to a risk condition satisfied by the resource parameter information.

The risk type includes, for example, a high utilization rate of virtual machines, an attack on virtual machines, and an access authority of external networks to stored resources. When the risk type is the high utilization rate of virtual machines, the corresponding risk condition is that the utilization rate of virtual machines is greater than a rate threshold. When the risk type is the attack on virtual machines, the corresponding risk condition is that an existence of a record of a virtual machine being attacked. When the risk type is the access authority of external networks to stored resources, the corresponding risk condition is setting an authority for external networks. In this way, the risk report can be pushed to the object to be processed in time, so as to solve the hidden risk.

In some embodiments of the disclosure, in response to the processing requirement being a service reporting requirement, the data to be processed is the work order information and the malfunction push information in the resource data. Correspondingly, the process of performing step 204 by the data processing apparatus may include, for example, determining first statistical data of the work order information in a preset work order dimension; determining second statistical data of the malfunction push information in a preset malfunction dimension; and generating the data processing result based on the first statistical data and the second statistical data. The preset work order dimension, such as an average frequency of malfunction, an average duration of malfunction, an average processing duration of work orders, and an average satisfaction degree of work orders, can be set according to actual needs, so that the resource of the object to be processed can be adjusted according to a service report in time.

In some embodiments of the disclosure, in response to the processing requirement being a cost reporting requirement, the data to be processed is the resource parameter information and the financial related information in the resource data. Correspondingly, the process of performing step 204 by the data processing apparatus may include, for example, determining cost data corresponding to at least one resource according to the resource parameter information and the financial related information; and generating the data processing result according to a sorted result of the cost data corresponding to the at least one resource.

In some embodiments of the disclosure, in response to the processing requirement being the information screening requirement, the data to be processed is the update push information in the resource data. Correspondingly, the process of performing step 204 by the data processing apparatus may include, for example, obtaining a resource subscribed by the object to be processed; and generating the data processing result according to the update push information related to the subscribed resource and/or the update push information related to the resource to be processed.

In step 205, the data processing result is pushed to the object to be processed.

It should be noted that, steps 201, 202, and 205 may be implemented in any way in the embodiments of the disclosure, which are not limited in the embodiments of the disclosure, and will not be repeated.

In conclusion, the data to be processed is selected from the resource data according to the data processing strategy corresponding to the processing requirement. The data to be processed is analyzed and processed according to the data processing strategy, and the data processing result corresponding to each processing requirement is obtained. Therefore, the quantity of the resource data to be processed during analysis can be reduced, and the data processing efficiency can be further improved.

In order to illustrate the above embodiments more clearly, examples are described as follows.

For example, as illustrated in FIG. 3, the data processing apparatus may be a cloud resource cost management system configured in a cloud platform, and the system includes a data processing portion, a data analysis portion and a visual board portion. The data processing portion includes a data obtaining module, a data aggregation module and a database. The data aggregation module is configured to aggregate the resource data collected by the data obtaining module according to the objects to be processed and store the aggregated data in the database. The data analysis portion includes a strategy library and an intelligent analysis module. The strategy library includes data processing strategies corresponding to various processing requirements. The intelligent analysis module is configured to analyze and process the resource data according to the data processing strategies. The visual board portion can display the resource data, such as the work order information, the malfunction information (malfunction push information), asset/bill (resource parameter information/financial related information), and messages (update push information). The visual board portion can display data processing results, such as a risk report, a service report, a cost report, and message screening.

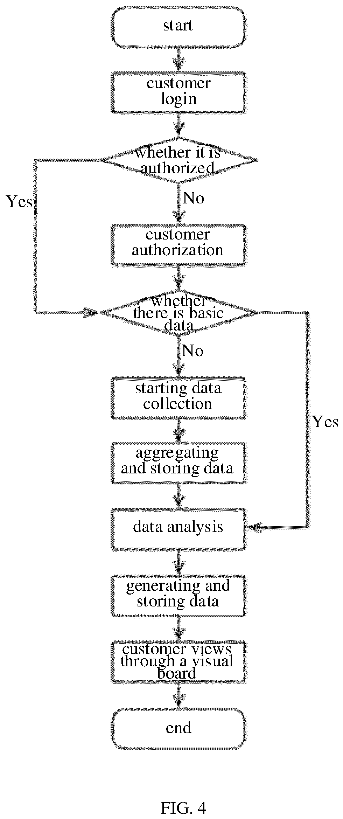

Correspondingly, as illustrated in FIG. 4, the data processing method executed by the data processing apparatus may include the following steps: (1) start; (2) customer login, that is, login of an object to be processed; (3) determining whether the customer is authorized, if so, executing (5); if not, executing (4); (4) customer authorization; (5) determining whether there is data in the database, if not, executing (6), if so, executing (8); (6) starting data collection; (7) aggregating the data and storing the data into the database; (8) data analysis; (9) generating a data processing result and storing the data processing result into the database; (10) viewing through a visual board by a user; and (11) end.

In order to realize the above embodiments, the disclosure also provides a data processing apparatus.

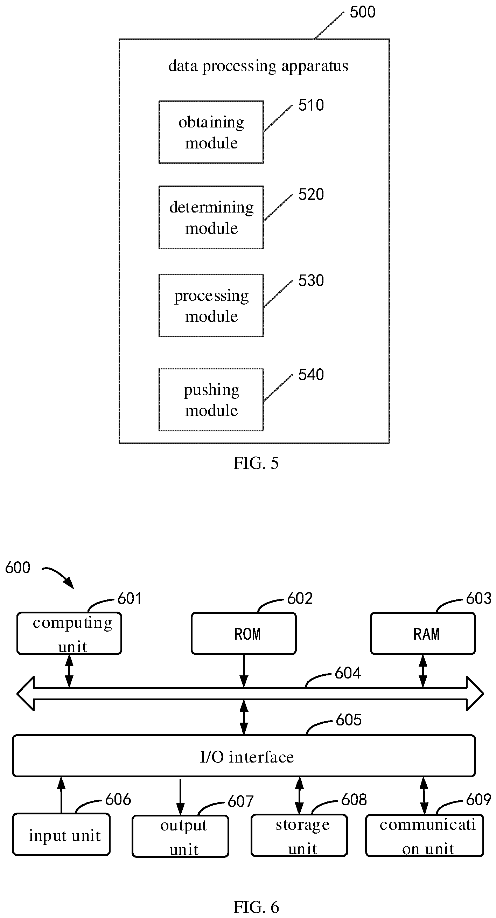

FIG. 5 is a block diagram of a data processing apparatus according to an embodiment of the disclosure. As illustrated in FIG. 5, the data processing apparatus 500 includes: an obtaining module 510, a determining module 520, a processing module 530 and a pushing module 540.

The obtaining module 510 is configured to obtain resource data of a resource to be processed of each cloud service on a cloud platform, the resource to be processed is a resource related to an object to be processed on the cloud platform.

The determining module 520 is configured to determine a processing requirement of the object to be processed.

The processing module 530 is configured to obtain a data processing result corresponding to the processing requirement by analyzing the resource data according to a data processing strategy corresponding to the processing requirement.

The pushing module 540 is configured to push the data processing result to the object to be processed.

In a possible implementation of some embodiments of the disclosure, the cloud service includes at least one of a work order system service, a message center service, a resource homepage service and a financial center service.

The resource data of the work order system service includes work order information corresponding to the resource to be processed. The resource data of the message center service includes malfunction push information and update push information corresponding to the resource to be processed. The resource data of the resource homepage service includes resource parameter information corresponding to the resource to be processed. The resource data of the financial center service includes financial related information corresponding to the resource to be processed.

In a possible implementation of some embodiments of the disclosure, the processing module 530 is configured to: select data to be processed from the resource data according to the data processing strategy corresponding to the processing requirement; and obtain the data processing result corresponding to the processing requirement by analyzing the data to be processed according to the data processing strategy.

In a possible implementation of some embodiments of the disclosure, the processing requirement includes at least one of a risk reporting requirement, a service reporting requirement, a cost reporting requirement and an information screening requirement.

In a possible implementation of some embodiments of the disclosure, in response to the processing requirement being the risk reporting requirement, the data to be processed is the resource parameter information in the resource data. The processing module 530 is configured to: determine whether the resource parameter information satisfies a risk condition corresponding to each risk type according to the resource parameter information; and generate the data processing result according to a risk type corresponding to a risk condition satisfied by the resource parameter information.

In a possible implementation of some embodiments of the disclosure, in response to the processing requirement being the service reporting requirement, the data to be processed is the work order information and the malfunction push information in the resource data. The processing 530 is configured to: determine first statistical data of the work order information in a preset work order dimension; determine second statistical data of the malfunction push information in a preset malfunction dimension; and generate the data processing result based on the first statistical data and the second statistical data.

In a possible implementation of some embodiments of the disclosure, in response to the processing requirement being the cost reporting requirement, the data to be processed is the resource parameter information and the financial related information in the resource data. The processing 530 is configured to: determine cost data corresponding to at least one resource according to the resource parameter information and the financial related information; and generate the data processing result according to a sorted result of the cost data corresponding to the at least one resource.

In a possible implementation of some embodiments of the disclosure, in response to the processing requirement being the information screening requirement, the data to be processed is the update push information in the resource data. The processing 530 is configured to: obtain a resource subscribed by the object to be processed; and generate the data processing result according to the update push information related to the subscribed resource and/or the update push information related to the resource to be processed.

In a possible implementation of some embodiments of the disclosure, the pushing module 540 is configured to: determine a first display format corresponding to the data processing result, and display the data processing result on a display interface of the object to be processed according to the display format; or, determine a second display format corresponding to the data processing result and a third display format corresponding to the resource data, and display the data processing result and the resource data respectively according to the second display format and third display format on the display interface of the object to be processed.

With the data processing apparatus according to the embodiments of the disclosure, the resource data of the resource to be processed of each cloud service on the cloud platform is obtained. The resource to be processed is the resource related to the object to be processed on the cloud platform. The processing requirement of the object to be processed is determined. The data processing result corresponding to the processing requirement is obtained by analyzing and processing the resource data according to the data processing strategy corresponding to the processing requirement. The data processing result is pushed to the object to be processed. Therefore, the data processing result obtained by the analysis and processing can be directly displayed for the object to be processed, manual acquisition of the resource data of the object to be processed and manual analysis and processing can be avoided, thereby improving the data acquisition efficiency, reducing the acquisition cost, and improving the analysis efficiency.

In the technical solution of the disclosure, the collection, storage, use, processing, transmission, provision and disclosure of the user's personal information involved are all carried out with user consent, the processes all comply with relevant laws and regulations, and do not violate public order and good customs.

According to the embodiments of the disclosure, the disclosure also provides an electronic device, a readable storage medium and a computer program product.

FIG. 6 is a block diagram of an example electronic device 600 used to implement the embodiments of the disclosure. The electronic device is intended to represent various forms of digital computers, such as laptop computers, desktop computers, workbenches, personal digital assistants, servers, blade servers, mainframe computers, and other suitable computers. Electronic devices may also represent various forms of mobile devices, such as personal digital processing, cellular phones, smart phones, wearable devices, and other similar computing devices. The components shown here, their connections and relations, and their functions are merely examples, and are not intended to limit the implementation of the disclosure described and/or required herein.

As illustrated in FIG. 6, the device 600 includes a computing unit 601 performing various appropriate actions and processes based on computer programs stored in a read-only memory (ROM) 602 or computer programs loaded from the storage unit 608 to a random access memory (RAM) 603. In the RAM 603, various programs and data required for the operation of the device 600 are stored. The computing unit 601, the ROM 602, and the RAM 603 are connected to each other through a bus 604. An input/output (I/O) interface 605 is also connected to the bus 604.

Components in the device 600 are connected to the I/O interface 605, including: an inputting unit 606, such as a keyboard, a mouse; an outputting unit 607, such as various types of displays, speakers; a storage unit 608, such as a disk, an optical disk; and a communication unit 609, such as network cards, modems, and wireless communication transceivers. The communication unit 609 allows the device 600 to exchange information/data with other devices through a computer network such as the Internet and/or various telecommunication networks.

The computing unit 601 may be various general-purpose and/or dedicated processing components with processing and computing capabilities. Some examples of computing unit 601 include, but are not limited to, a central processing unit (CPU), a graphics processing unit (GPU), various dedicated AI computing chips, various computing units that run machine learning model algorithms, and a digital signal processor (DSP), and any appropriate processor, controller and microcontroller. The computing unit 601 executes the various methods and processes described above, such as the data processing method. For example, in some embodiments, the method may be implemented as a computer software program, which is tangibly contained in a machine-readable medium, such as the storage unit 608. In some embodiments, part or all of the computer program may be loaded and/or installed on the device 600 via the ROM 602 and/or the communication unit 609. When the computer program is loaded on the RAM 603 and executed by the computing unit 601, one or more steps of the method described above may be executed. Alternatively, in other embodiments, the computing unit 601 may be configured to perform the method in any other suitable manner (for example, by means of firmware).

Various implementations of the systems and techniques described above may be implemented by a digital electronic circuit system, an integrated circuit system, Field Programmable Gate Arrays (FPGAs), Application Specific Integrated Circuits (ASICs), Application Specific Standard Products (ASSPs), System on Chip (SOCs), Load programmable logic devices (CPLDs), computer hardware, firmware, software, and/or a combination thereof. These various embodiments may be implemented in one or more computer programs, the one or more computer programs may be executed and/or interpreted on a programmable system including at least one programmable processor, which may be a dedicated or general programmable processor for receiving data and instructions from the storage system, at least one input device and at least one output device, and transmitting the data and instructions to the storage system, the at least one input device and the at least one output device.

The program code configured to implement the method of the disclosure may be written in any combination of one or more programming languages. These program codes may be provided to the processors or controllers of general-purpose computers, dedicated computers, or other programmable data processing devices, so that the program codes, when executed by the processors or controllers, enable the functions/operations specified in the flowchart and/or block diagram to be implemented. The program code may be executed entirely on the machine, partly executed on the machine, partly executed on the machine and partly executed on the remote machine as an independent software package, or entirely executed on the remote machine or server.

In the context of the disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), electrically programmable read-only-memory (EPROM), flash memory, fiber optics, compact disc read-only memories (CD-ROM), optical storage devices, magnetic storage devices, or any suitable combination of the foregoing.

In order to provide interaction with a user, the systems and techniques described herein may be implemented on a computer having a display device (e.g., a Cathode Ray Tube (CRT) or a Liquid Crystal Display (LCD) monitor for displaying information to a user); and a keyboard and pointing device (such as a mouse or trackball) through which the user can provide input to the computer. Other kinds of devices may also be used to provide interaction with the user. For example, the feedback provided to the user may be any form of sensory feedback (e.g., visual feedback, auditory feedback, or haptic feedback), and the input from the user may be received in any form (including acoustic input, voice input, or tactile input).

The systems and technologies described herein can be implemented in a computing system that includes background components (for example, a data server), or a computing system that includes middleware components (for example, an application server), or a computing system that includes front-end components (for example, a user computer with a graphical user interface or a web browser, through which the user can interact with the implementation of the systems and technologies described herein), or include such background components, intermediate computing components, or any combination of front-end components. The components of the system may be interconnected by any form or medium of digital data communication (e.g., a communication network). Examples of communication networks include: local area network (LAN), wide area network (WAN), and the Internet.

The computer system may include a client and a server. The client and server are generally remote from each other and interacting through a communication network. The client-server relation is generated by computer programs running on the respective computers and having a client-server relation with each other. The server can be a cloud server, a distributed system server, or a server combined with a block-chain.

It should be understood that the various forms of processes shown above can be used to reorder, add or delete steps. For example, the steps described in the disclosure could be performed in parallel, sequentially, or in a different order, as long as the desired result of the technical solution disclosed in the disclosure is achieved, which is not limited herein.

The above specific embodiments do not constitute a limitation on the protection scope of the disclosure. Those skilled in the art should understand that various modifications, combinations, sub-combinations and substitutions can be made according to design requirements and other factors.

## Claims

1. A data processing method, comprising:
obtaining (S101; S201) resource data of a resource to be processed of each cloud service on a cloud platform, wherein the resource to be processed is a resource related to an object to be processed on the cloud platform;
determining (S102; S202) a processing requirement of the object to be processed;
obtaining (S103) a data processing result corresponding to the processing requirement by analyzing the resource data according to a data processing strategy corresponding to the processing requirement; and
pushing (S104; S205) the data processing result to the object to be processed.

2. The method of claim 1, wherein the cloud service comprises at least one of a work order system service, a message center service, a resource homepage service and a financial center service; wherein,
resource data of the work order system service comprises work order information corresponding to the resource to be processed;
resource data of the message center service comprises malfunction push information and update push information corresponding to the resource to be processed;
resource data of the resource homepage service comprises resource parameter information corresponding to the resource to be processed; and
resource data of the financial center service comprises financial related information corresponding to the resource to be processed.

3. The method of claim 1 or 2, wherein obtaining (S103) the data processing result corresponding to the processing requirement by analyzing the resource data according to the data processing strategy corresponding to the processing requirement comprises:
selecting (203) data to be processed from the resource data according to the data processing strategy corresponding to the processing requirement; and
obtaining (204) the data processing result corresponding to the processing requirement by analyzing the data to be processed according to the data processing strategy.

4. The method of any of claims 1 to 3, wherein the processing requirement comprises at least one of a risk reporting requirement, a service reporting requirement, a cost reporting requirement and an information screening requirement.

5. The method of claim 3, wherein in response to the processing requirement being the risk reporting requirement, the data to be processed is resource parameter information in the resource data;
obtaining (204) the data processing result corresponding to the processing requirement by analyzing the data to be processed according to the data processing strategy comprises:
determining whether the resource parameter information satisfies a risk condition corresponding to each risk type according to the resource parameter information; and
generating the data processing result according to a risk type corresponding to a risk condition satisfied by the resource parameter information.

6. The method of claim 3, wherein in response to the processing requirement being the service reporting requirement, the data to be processed is work order information and malfunction push information in the resource data;
obtaining (204) the data processing result corresponding to the processing requirement by analyzing the data to be processed according to the data processing strategy comprises:
determining first statistical data of the work order information in a preset work order dimension;
determining second statistical data of the malfunction push information in a preset malfunction dimension; and
generating the data processing result based on the first statistical data and the second statistical data.

7. The method of claim 3, wherein in response to the processing requirement being the cost reporting requirement, the data to be processed is resource parameter information and financial related information in the resource data;
obtaining (204) the data processing result corresponding to the processing requirement by analyzing the data to be processed according to the data processing strategy comprises:
determining cost data corresponding to at least one resource according to the resource parameter information and the financial related information; and
generating the data processing result according to a sorted result of the cost data corresponding to the at least one resource.

8. The method of claim 3, wherein in response to the processing requirement being the information screening requirement, the data to be processed is update push information in the resource data;
obtaining (204) the data processing result corresponding to the processing requirement by analyzing the data to be processed according to the data processing strategy comprises:
obtaining a resource subscribed by the object to be processed; and
generating the data processing result according to update push information related to the subscribed resource and/or update push information related to the resource to be processed.

9. The method of any of claims 1 to 8, wherein pushing (S104; S205) the data processing result to the object to be processed comprises:
determining a first display format corresponding to the data processing result, and displaying the data processing result on a display interface of the object to be processed according to the display format;
or,
determining a second display format corresponding to the data processing result and a third display format corresponding to the resource data, and displaying the data processing result and the resource data respectively according to the second display format and the third display format on the display interface of the object to be processed.

10. A data processing apparatus (500), comprising:
an obtaining module (510), configured to obtain resource data of a resource to be processed of each cloud service on a cloud platform, wherein the resource to be processed is a resource related to an object to be processed on the cloud platform;
a determining module (520), configured to determine a processing requirement of the object to be processed;
a processing module (530), configured to obtain a data processing result corresponding to the processing requirement by analyzing the resource data according to a data processing strategy corresponding to the processing requirement; and
a pushing module (540), configured to push the data processing result to the object to be processed.

11. The apparatus (500) of claim 10, wherein the cloud service comprises at least one of a work order system service, a message center service, a resource homepage service and a financial center service; wherein,
resource data of the work order system service comprises work order information corresponding to the resource to be processed;
resource data of the message center service comprises malfunction push information and update push information corresponding to the resource to be processed;
resource data of the resource homepage service comprises resource parameter information corresponding to the resource to be processed; and
resource data of the financial center service comprises financial related information corresponding to the resource to be processed.

12. The apparatus (500) of claim 10 or 11, wherein the processing module (530) is configured to:
select data to be processed from the resource data according to the data processing strategy corresponding to the processing requirement; and
obtain the data processing result corresponding to the processing requirement by analyzing the data to be processed according to the data processing strategy.

13. An electronic device, comprising:
at least one processor; and
a memory communicatively coupled to the at least one processor; wherein,
the memory stores instructions executable by the at least one processor, when the instructions are executed by the at least one processor, the at least one processor is enabled to implement the method of any of claims 1-9.

14. A non-transitory computer-readable storage medium storing computer instructions, wherein the computer instructions are configured to cause a computer to implement the method of any of claims 1-9.

15. A computer program product comprising computer programs, wherein when the computer programs are executed by a processor, the method of any of claims 1-9 is implemented.
